# EUROPEAN PATENT APPLICATION

(11) **EP 3 987 905 A1**
(43) Date of publication of application: **27.04.2022**
(21) Application number: 21203768.3
(22) Date of filing: 20.10.2021
(51) Int. Cl.: A01D 34/63, A01D 34/73

(54) **KNIFE CARRIER ARRANGEMENT FOR A LAWN MOVER AND METHOD FOR PERFORMING A KNIFE EXCHANGE**

(30) Priority: 22.10.2020 SE 2051230
(71) Applicant: HUSQVARNA AB, 561 82 Huskvarna (SE)
(72) Inventor: OLOFSSON, Willy, 561 46 HUSKVARNA (SE); BERGH, Rickard, 575 36 EKSJÖ (SE)

(57) **Abstract**

A knife unit (7a, 7b) for a cutter assembly in a work tool comprises one or more knives (13a, 13b) and a support structure (14a, 14b). The support structure (14a, 14b) comprises a connector (20a, 20b) arranged at least partly at a peripheral edge of the support structure (1a, 1b) for connection with a rotatable structure (1a, 1b). A knife carrier arrangement includes the detachable knife unit (7a, 7b).

A lawn mower comprises the knife carrier arrangement (1a, 1b).

A method for performing a knife exchange in a work tool comprises the steps of: deforming the knife unit (7a, 7b), loosening a connection portion (20a, 20b) of the support structure (14a, 14b) from the knife carrier arrangement (1a, 1b), dismounting the knife unit (7a, 7b), placing a second knife unit (7a, 7b) on the knife carrier arrangement (1a, 1b), and deforming the second knife unit (7a, 7b) to bring it into connection with the knife carrier arrangement (1a, 1b).

## Description

### Field of the invention

The present invention relates to a knife unit for a cutter assembly in a work tool, comprising one or more knives and a support structure carrying the knives, the support structure comprising a connector for connection with a rotatable structure.

The invention also relates to a knife carrier arrangement including a detachable knife unit.

The invention further relates to a lawn mower comprising a knife carrier arrangement.

Even further, the invention relates to a method for performing a knife exchange in a work tool comprising a knife carrier arrangement.

### Background

US 9936635 B2 discloses a power tool including a disk with at least one knife fixedly connected to the disk. The disk is arranged to rotate with a rotating drive shaft. In the various embodiments disclosed in this document, the disk is attached at its central portion to the drive shaft. The attachment includes a number of small components. Hence the dismounting of the knives, e. g. for the sharpening or the exchange thereof, may be cumbersome and time-consuming. The risk of injuries when handling the knives is significant. Skilled staff may often have to be consulted, which will further increase the cost of maintenance and reparations for the ordinary consumer.

CN210183903U discloses a knife carrier arrangement which may be mounted by the application of an openable ring with interior lugs. The interior lugs are arranged to penetrate into corresponding openings in the drive shaft and a flange on the knife carrier arrangement respectively. The rotational movement of the drive shaft is transferred to the knife carrier arrangement by way of the lugs.

### Summary

It is an object of the present invention to solve, or at least mitigate, parts or all of the above-mentioned problems. To this end, there is provided a knife unit wherein the connector is arranged at least partly at a peripheral edge of the support structure.

Hereby the knife unit may be easily mountable and demountable on a knife carrier arrangement and allowing for a quick and easy exchange of the knives. The risk of injury when handling the knife unit may be significantly lower than when handling the knives separately. The knife unit may be securely fastened to the rotatable structure, even during extended periods of use.

In an embodiment the support structure extends mainly in a single plane.

Hereby the knife unit may easily fit on a knife carrier arrangement, while keeping a limited extent in an axial direction of the knife carrier arrangement.

In some embodiments the support structure is arranged to be deformable in one or more discrete portions thereof.

Hereby the knife unit may be temporarily deformed, so that it may be mounted on the knife carrier arrangement, while regaining its shape in a mounted position.

In some embodiments the support structure is arranged to be continuously deformable.

Hereby the knife unit may be temporarily deformed in an alternative manner, so that it may be mounted on the knife carrier arrangement, and regaining its shape in a mounted position.

In one embodiment the support structure has an at least partly circular periphery.

Hereby the knife unit may advantageously be mounted on a circular knife carrier arrangement.

In a further embodiment, the support structure comprises locations where the material thickness in a radial direction is less than 5% of a transversal dimension of the support structure.

Hereby the knife unit may be easily mounted on a knife carrier arrangement and easily demounted as needed by compressing or deforming the locations where the material thickness is low, thereby reducing the outer diameter of the support structure.

In one embodiment the support structure comprises at least one weakened portion.

Hereby the support structure may be slightly deformed for the mounting and dismounting of the knife unit and regaining its shape for a secure positioning and fastening on a knife carrier arrangement.

In an even further embodiment, the support structure comprises at least one cut-out portion in a main plane of extent of the support structure.

Hereby the amount of material in the support structure may be reduced and the cost thereof may be lowered. The support structure may also be more easily deformed for quick and easy mounting and demounting of the knife unit on the knife carrier arrangement.

In a further embodiment the support structure is annular and at least one weakened portion is arranged at a peripheral edge of the support structure.

Hereby the support structure may be a stable structure with an easily accessible weakened portion to allow for quick and easy demounting of the knife unit.

In other embodiments one weakened portion is arranged at a central portion of the support structure.

Hereby the support structure may be a stable structure with a weakened portion that may provide an evenly distributed deformation of the support structure.

In further embodiments the weakened portion comprises a narrow, bendable bridge of material between larger portions of the support structure.

Hereby the support structure may be one single unit, which has elastic properties.

In even further embodiments the weakened portion comprises a hinge.

Hereby the knife unit may be opened and attain a wider shape and closed again, to attain a narrower shape.

In some embodiments the weakened portion includes a slit.

Hereby the dimensions of the support structure may be temporarily varied in order to mount and dismount the knife unit.

In some further embodiments the weakened portion is 1-10 mm wide.

Hereby the reduction of the dimensions of the support structure may be sufficient to allow the mounting and dismounting when compressed.

In some embodiments the connector includes a slit.

Hereby the connector may be adapted in size to allow for engagement and disengagement of thereof.

In some embodiments the support structure comprises a circular disc with radial slits.

Hereby the support structure may be somewhat compressed in its radial direction and yet elastic, so that it may regain its original transversal dimension.

In a further embodiment each slit has an open end and a closed end, and the slits are arranged with their open ends directed towards the periphery alternatingly with their open ends directed towards the center of the disc.

Hereby the elastic properties of the disc-shaped support structure may be further enhanced.

In some embodiments the connector comprises a circumferential bead.

Hereby the connector may interact with other connecting devices for a secure fastening of the knife unit.

In some embodiments the connector comprises a material which is different from the material of the rest of the support structure.

Hereby the connector and the rest of the support structure may each be provided with suitable properties e. g. regarding hardness, elasticity, friction, etc. in order to ensure that the needed fixation is attained. At the same time, useful properties for a easy exchange of the knife unit may be maintained.

In some embodiments a portion of the support structure is domed and transferable between two shapes.

Hereby the knife unit may be easily and reliably snapped into and out of its position in the cutter assembly.

In some embodiments one or more of the knives are arranged on the support structure with an articulation.

Hereby each of the knives may be pivotable around their respective fastening element for an efficient cutting performance. For cases where they are not fully pivotable, they may be adjusted to different angles, which may be useful for different cutting tasks. Also, the knives may be provided with yielding properties, which may protect the knives from damage if they accidentally run into an excess resistance, e. g. from contact with the ground etc.

In some embodiments the knives extend beyond the peripheral edge of the support structure.

Hereby several cutting advantages may be attained, e. g. that while the inner parts of the knives may be protected by the support structure, the outer edges may be free to cut the grass with a minimum friction from the support structure, the knife unit, the rotatable structure, i. e. a knife carrier arrangement, whereon it is mounted, or a skid plate below the knife carrier arrangement.

According to a second aspect, parts or all of the above-mentioned problems are solved, or at least mitigated, by a knife carrier arrangement including a detachable knife unit as described above.

Hereby a quick dismounting and remounting of knives for sharpening, reparations etc. may be performed.

In a further embodiment the knife carrier arrangement comprises at least one connector device for interaction with the connector of the knife unit.

Hereby the knife unit may be fastened reliably to the knife carrier arrangement.

In an even further embodiment at least one connector device has a C-shaped cross-section.

Hereby a snap fastening of the knife unit in the connector device may be performed.

In further embodiments one connector device is annular and arranged at a peripheral edge of the knife carrier arrangement.

Hereby a secure and evenly distributed grip may be accomplished.

In some embodiments the connector device is a circumferential groove with a section that is complementary to a section of the connector of the knife unit.

Hereby the connector and the connector device may fit together well for a secure connection of the knife unit to the knife carrier arrangement.

In some embodiments one connector device is arranged at a central portion of the knife carrier arrangement.

Hereby a central portion of the knife unit may be secured and loosened at its central portion for a secure fastening of the knife unit.

In some embodiments a projection is arranged to extend inwards from a peripheral edge of the knife carrier arrangement, and the mounted knife unit contacts the projection in the circumferential direction of the knife carrier arrangement.

Hereby the knife unit may be kept in its position in the knife carrier arrangement without rotating in relation to the knife carrier arrangement, even when the knife carrier arrangement rotates during cutting. Also, by extending into a slit in the support structure, the projection may keep the slit open and prevent the support structure from altering it shape during use. Hereby an accidental loosening of the knife unit from the knife carrier arrangement may be prevented.

In a third aspect of the invention a lawn mower comprises a knife carrier arrangement as described above.

The knife carrier arrangement may be particularly useful in a lawn mower, especially in a robotic lawn mower, since the knives may be quickly exchanged for sharpening etc, thereby reducing the downtime of the lawn mower.

In a fourth aspect of the invention, the method of performing a knife exchange comprises the steps of: deforming the knife unit in one or more deformable portions of the support structure, loosening the connection portion of the support structure from the knife carrier arrangement, dismounting the knife unit from the knife carrier arrangement, placing a second knife unit on the knife carrier arrangement, and deforming the deformable portion of the second knife unit to bring the connector into connection with the knife carrier arrangement.

Hereby the exchange of the knives may be performed quickly and with few loose parts, since the knife unit is coherent, and may typically snap into and out of its place by a slight deformation.

In one embodiment deforming the deformable portion comprises transferring the support structure between two shapes thereof.

Hereby the fastening and loosening of the knife unit may be performed e. g. by a click function when applying pressure on a domed deformable portion.

In a further embodiment deforming the deformable portion comprises compressing and widening of a slit.

Hereby the shape of the support structure may be changed by e. g. reducing the circumference of the support structure.

It is noted that embodiments of the invention may be embodied by all possible combinations of features recited in the claims. Further, it will be appreciated that the various embodiments described for the device are all combinable with the method as defined in accordance with the second aspect of the present invention, and vice versa.

### Brief description of the drawings

The above, as well as additional objects, features and advantages of the present invention, will be better understood through the following illustrative and nonlimiting detailed description of preferred embodiments of the present invention, with reference to the appended drawings, where the same reference numerals will be used for similar elements, wherein:
- Fig. 1a: is a diagrammatic view of a rotatable structure according to one embodiment of the disclosure;
- Fig. 1b: is a sectional view of the rotatable structure along the line A-A in Fig. 1a;
- Fig. 1c: is an enlarged sectional view of the edge area of the rotatable structure;
- Fig. 1d: is a perspective view of the rotatable structure of Fig. 1a;
- Fig. 2a: is a perspective view of a knife unit for use with the rotatable structure of Figs. 1a-c;
- Fig. 2b: is an enlarged sectional view of the edge area of the knife unit according to Fig. 2a;
- Fig. 2c: is a diagrammatic view of the rotatable structure according to Fig. 1a with the mounted knife unit according to Fig 2a;
- Fig. 3a: is a diagrammatic view of a rotatable structure according to another embodiment of the disclosure;
- Fig. 3b: is a perspective view of the rotatable structure of Fig. 3a;
- Fig. 4a: is a diagrammatic view of a knife unit for use with the rotatable structure of Figs. 3a-b;
- Fig. 4b: is an enlarged sectional view of the edge area of the knife unit according to Fig. 4a;
- Fig. 4c: is a perspective view of the knife unit in Figs. 4a-b; and
- Fig. 4d: is a diagrammatic view of the rotatable structure according to Fig. 3a with the mounted knife unit according to Fig 4a.

All the figures are schematic, not necessarily to scale, and generally only show parts which are necessary in order to elucidate the embodiments, wherein other parts may be omitted.

### Detailed description of the exemplary embodiments

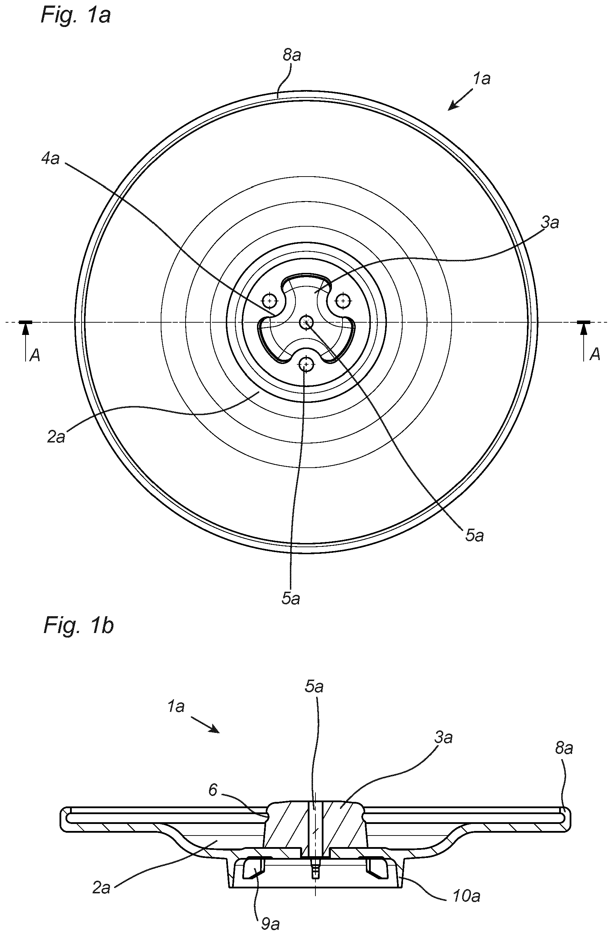

Fig. 1a illustrates a rotatable structure 1a according to a first embodiment of the disclosure. The rotatable structure 1a is fixedly arranged on a drive shaft (not shown) and may rotate therewith. The rotatable structure has the general shape of a circularly symmetrical plate or disc with an indented central portion 2a.

A hub 3a is arranged in the middle of the indented central portion 2a. In the disclosed embodiment, the hub 3a comprises three indentations 4a, which are approximately symmetrically arranged around the hub 3a, to provide access to holes 5a for fasteners, such as screws, rivets, etc., in order to fasten the rotatable structure 1a on the drive shaft. There may also be another hole 5a arranged at the center of the hub 3a.

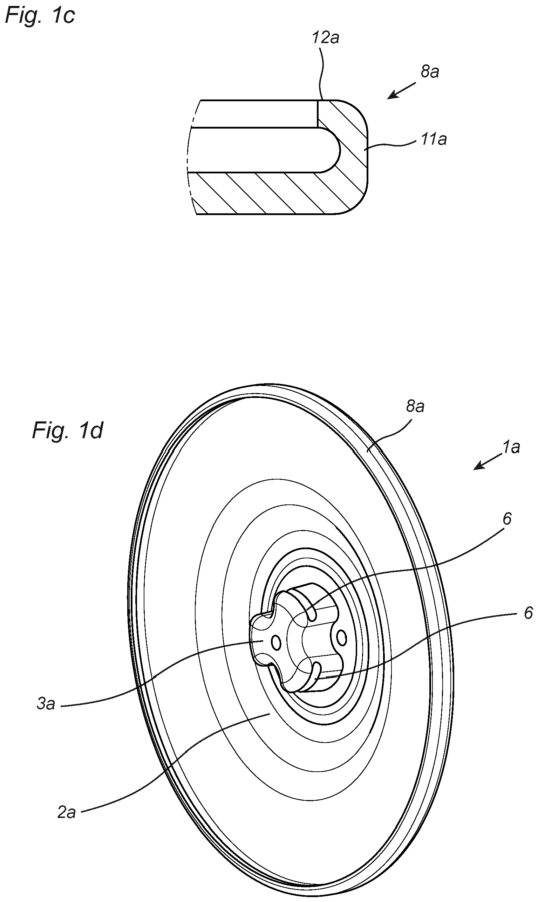

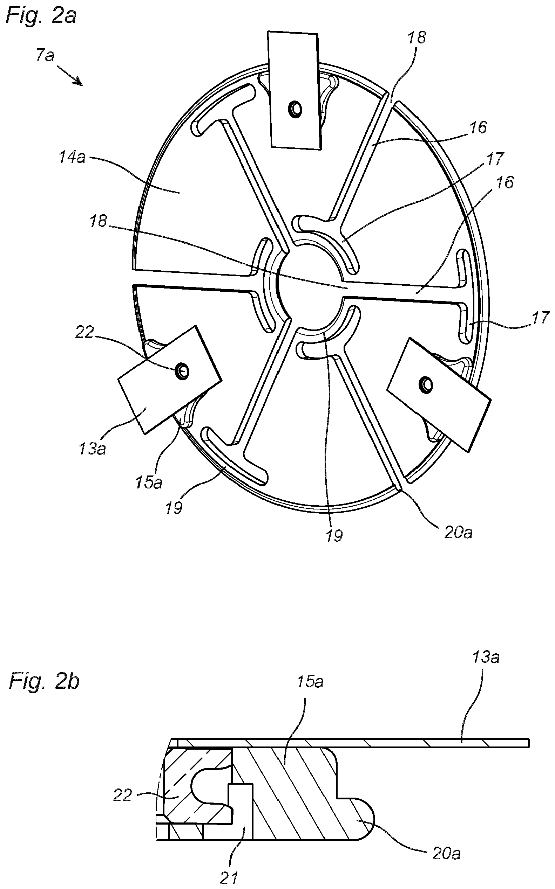

The hub 3a is also provided with intermittent, circumferential grooves 6, which will be better visible in Figs. 1b and 1d. The grooves 6 may have the function of holding the center of a knife unit 7a, which will be described below in connection with Figs. 2a-2b.

The rotatable structure 1a is provided with an outer, undercut, C-shaped edge 8a around its circumference. The outer edge 8a may serve to hold the outer edges of the knife unit 7a in place.

Fig. 1b shows the rotatable structure 1a in a section taken along the line A-A in Fig. 1a. The figure shows clearly the indented central portion 2a and the hub 3a in the middle thereof. The intermittent, circumferential grooves 6a are visible in the sides of the hub 3a. In the disclosed embodiment, they are arranged at approximately the same level as the outer edge 8a. Hereby they may both cooperate to hold a flat knife unit 7a (not disclosed in Fig. 1b) in its intended position.

The central hole 5a for a fastener through the hub 3a is visible, as well as two sleeves 9a, which are extending from the holes 5a around the hub 3a. At the side of the rotatable structure 1a, opposite the hub 3a, there is a peripheral wall 10a arranged to enclose an outer end of the drive shaft when the rotatable structure 1a is fastened thereon.

In enlarged view of the outer edge 8a in Fig. 1c, it is clearly visible that there is an outer portion 11a of the edge 8a, transverse to the main plane of the disc-like, rotatable structure 1a. There is also a free end portion 12a, extending inwards, towards the central portion 2a of the rotatable structure 1a at a distance therefrom, corresponding to an edge of the not shown knife unit 7a.

The general layout of the rotatable structure 1a is shown in perspective in Fig. 1d. Herein the indented central portion 2a, the grooves 6 in the hub 3a, and the edge 8a are clearly visible.

The knife unit 7a, which has been briefly mentioned above, is shown in perspective in Fig. 2a. The knife unit 7a comprises a support structure 14a, and a number of knives 13a, in this embodiment three, which are arranged at approximately equal mutual distances around the edge of the support structure 14a. In this embodiment the knives 13a extend partly outside the outer edge of the support structure 14a.

The knives 13a are preferably fastened to the support structure 14a at fortified, thicker portions 15a thereof by means of fastening elements 22. Whereas screws may be used for a dismountable fastening of the knives 13a, rivets may be used for a fastening where the thickness dimension of the knife unit 13a is critical, since rivets may be fastened in a thinner support structure 14a. Also, rivets may, in themselves, have a moderate length, which may not contribute significantly to the thickness of the knife structure 7a.

When rivets are used as fastening elements 22, the knives 13a may not be removable, and sharpening of the knives 13a may hence be difficult. Rivets may be particularly useful for knife units 7a, which are manufactured and sold as disposable replacement parts.

The support structure 14a comprises a number of radial slits 16, which each end with a transversal slit portion 17 at one closed end of the respective slit 16, which results in a T-shaped slit form. The other end 18 of the slit 16 is open. The slits 16 are arranged alternately with their open ends 18 at the center of the support structure 14a or at an outer edge 20a, or circumferential bead, of the support structure 14a. The transversal slit portions 17 are thereby also arranged alternately at the central or at the outer edge 20a of the support structure 14a. Between each of the transversal slit portions 17 and the respective edge there is a narrow, slightly bendable bridge 19 of the material, which constitutes the support structure 14a.

The slits 16, 17 and the bendable bridges 19 are weakened portions, which provide the support structure 14a with a great flexibility, in particular in its axial and circumferential directions. In particular, the support structure 14a, which has the general shape of a flat, circular disc with a central, circular hole, may be slightly compressed at its outer edge 20a by narrowing the open ends of the slits 16. With a somewhat larger compressing force applied on the outer edge 20a, the bendable bridges 19 may be slightly curved. If the edge of the central hole is also compressed so that the open ends of the slits 16 are narrowed and the inner, bendable bridges 19 are curved, the support structure 14a may attain a funnel-like shape, at least temporarily. In the embodiments disclosed herein, the material of the support structure 14a has elastic properties, which means that the support structure 14a may regain its shape when the compressing force is released.

The temporary change of shape and dimensions may enable a snap-fastening of the knife unit 7a on the rotatable structure 1a discussed above in connection with Figs. 1a-d. The outer edge 20a of the support structure 14a, shown in an enlarged view in Fig. 2b, may fit into the C-shaped edge 8a of the rotatable structure 1a, and abut the outer portion 11a and the end portion 12a thereof, when the support structure 14a is in its original, non-compressed state. Hereby the outer edge 20a has the function of a connector, which connects the support structure 14a of the knife unit 7a with the rotatable structure 1a.

The edge 20a of the support structure 14a may be profiled to a shape which is complementary to the shape of the C-shaped edge 8a of the rotatable structure 1a. A recess 21 next to the profiled outer edge 20a may make the outer edge 20a slightly flexible and may facilitate the fastening of the knife unit 7a on the rotatable structure 1a.

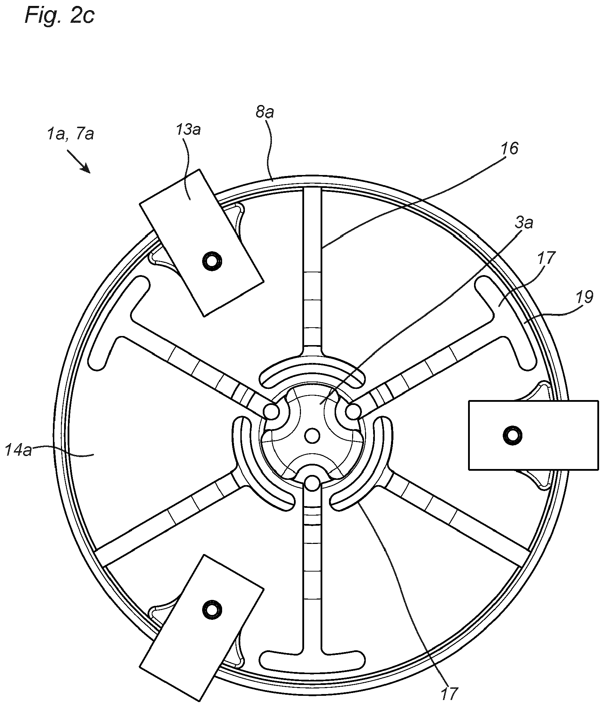

Fig. 2c shows the rotatable structure 1a with the knife unit 7a mounted thereon. In this state the rotatable structure 1a and the knife unit 7a are ready for use in a robotic work tool. The mounting and dismounting of the knife unit 7a may be performed quickly with few tools. Arranging a skid plate on the rotatable structure 1a and the knife unit 7a is optional.

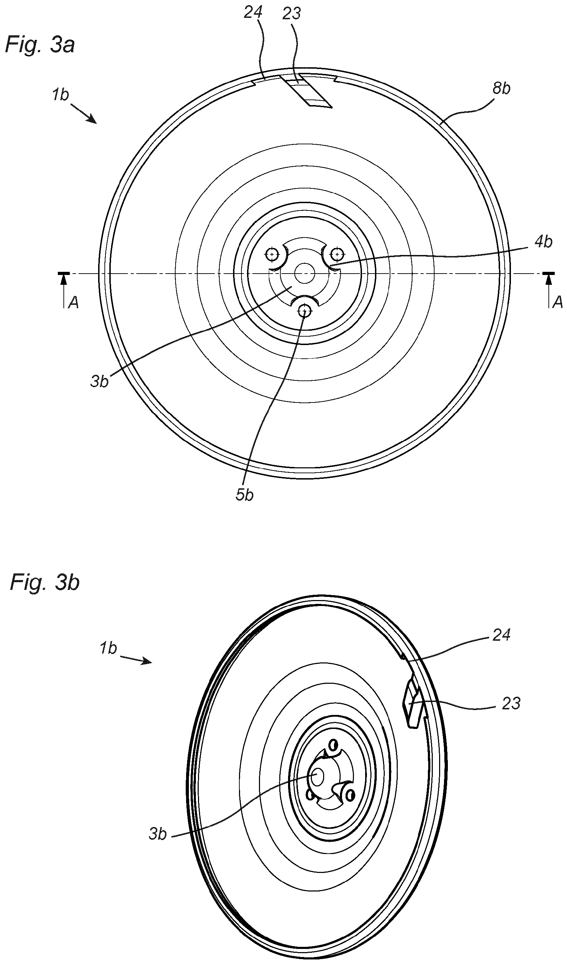

A second embodiment of the rotatable structure 1b is disclosed in Fig. 3a. As in the embodiment described above, the rotatable structure 1b has the general shape of a disc with an indented central portion 2b. There is a central hub 3b, which, like in the previous embodiment is provided with indentations 4b and holes 5b for fasteners, fixing the rotatable structure 1b to a drive shaft in a work tool. The rotatable structure 1b is provided with a C-shaped outer edge 8b, serving basically the same purpose as the outer edge 8a of the previously described embodiment.

Unlike the previous embodiment, the rotatable structure 1b is provided with a lug 23 close to the edge 8b for a fixation of a second embodiment of a knife unit 7b. The lug 23 is arranged at an angle to a radial direction of the rotatable structure 1b. The purpose of the lug 23 is to keep the flexible knife unit 7b in a maximally expanded position, so that it will be fixed against the outer edge 8b. Further details of the fixation will be described below in connection with the description of the second embodiment of the knife unit 7b.

Next to the lug 23 there may be provided at least one notch 24 in the edge 8b. The notch 24 may provide access to the knife unit 7b for the dismounting thereof. A tool may be used for removing the knife unit 7b from contact with the sides of the lug 23, thereby allowing a compression of the knife unit 7b, so that it may be possible to remove it from the rotatable structure 1b.

Fig. 3b shows the rotatable structure 1b in a perspective view. The edge 8b, the hub 3b, the lug 23 and the notch 24 and their extent in all directions are clearly visible therein.

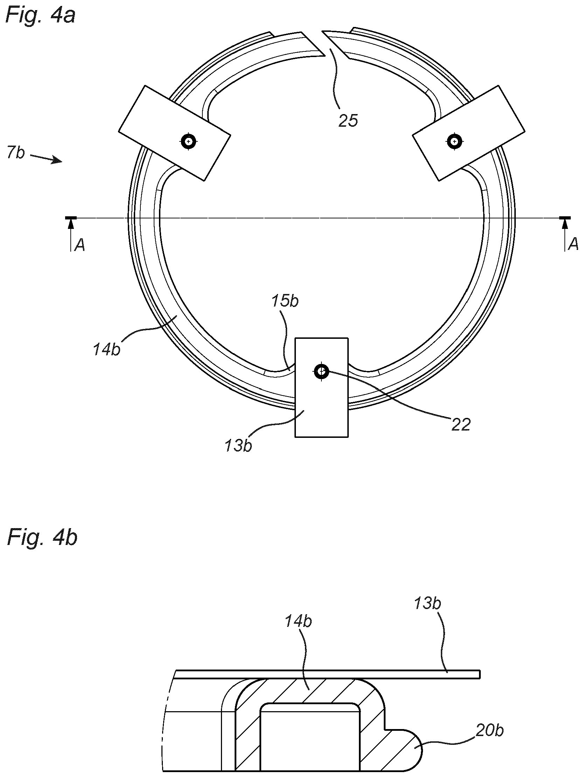

The second embodiment of the knife unit 7b, that may be used with the rotatable structure 1b of Figs. 3a-b, is shown in Fig. 4a. Like the embodiment shown in Figs. 2a-b, the knife unit 7b comprises a support structure 14b, with a number of knives 13b mounted at fortified portions 15b and extending some distance outside of the edge 8b of the support structure 14b. The fortified portions 15b, and hence the knives 13b, are arranged at approximately equal distances around the support structure 14b, which has the general shape of a ring.

The ring-shaped support structure 14b is provided with a weakened portion in the shape of a slit 25, which is arranged at an angle with the radial direction of the support structure 14b. The slit 25 may allow a compression thereof, so that the support structure 14b may be deformed and may be able to snap into and out of interaction with the rotatable structure 1b. The width of the slit 25 corresponds to the width of the lug 23 of the rotatable structure 1b or slightly less. In the embodiment disclosed in Figs. 4a-c, the slit 25 is open at both ends, but in other embodiments one or both ends of the slit 25 may be at least partially closed with a narrow bridge of material. The various possible shapes of the slit 25 and its vicinity corresponds to the weakened portions comprising the narrow bridge 19 of material and the slit portions 17 described above in connection with Figs. 2a-c. The shape and extent of the lug 23 of the rotatable structure 14b may be adapted accordingly to fit in the slit 25 or opening.

When the slit 25 or opening is compressed, the diameter of the support structure 14b may be decreased, and the support structure 14b may be inserted inside the outer, C-shaped edge 8b. Hereby the compressed slit 25 should preferably be positioned in the vicinity of the lug 23. When the compression is released, the slit 25 and the support structure 14b may regain their previous shapes and expand into contact with the C-shaped edge 8b.

In order to secure the knife unit 7b in its position on the rotatable structure 1b, the sides of the slit 25 are positioned on either side of the lug 23. The lug 23 may keep the slit 25 in its open position, whereby the support structure 14b stays in contact with the C-shaped edge 8b. The positioning of the lug 23 in the slit 25 may also have the effect of keeping the support structure 14b from rotating relative to the rotatable structure. Hereby the knives 13b will have distinct positions and not yield during use.

As shown in fig. 4b, the support structure 14b of the knife unit 7b may have an approximately U-shaped section, with the shanks of the U designed to face the rotatable structure 1b, when the knife unit 7b is mounted thereon. A circumferentially extending, outer edge or bead 20b of the support structure 14b is also visible in Fig. 4b. Like the outer edge 20a of the first embodiment described above, the outer edge 20b may fit into the circumferential edge 8b of the rotatable structure 1b, thereby connecting the knife unit with the rotatable structure 1b and holding the knife unit 7b in its position during use.

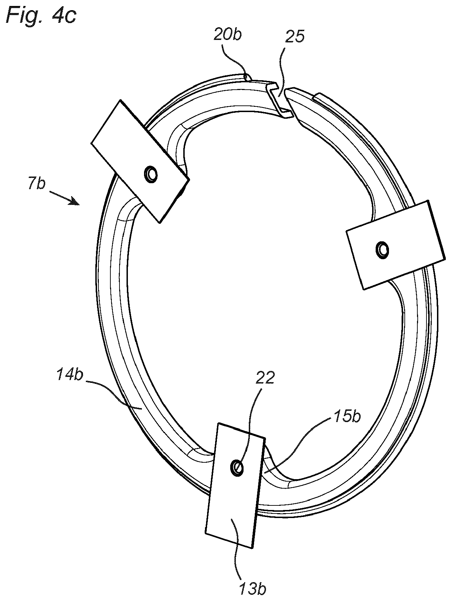

In Fig. 4c, the knife unit 7b is shown in perspective. As for the first embodiment described above, the knives 13b are preferably screwed or riveted to the support structure 14b at fortified portions 15b thereof. Whereas the fastening elements 22 may be screws for a dismountable fastening of the knives 13b, rivets may be used for a fastening where the thickness dimension of the knife unit 7b is critical, since rivets may be fastened in a thinner support structure 14b and may not in themselves contribute further to the thickness of the knife unit 7b. Rivets may be an option when the knife unit 7b is a disposable spare part.

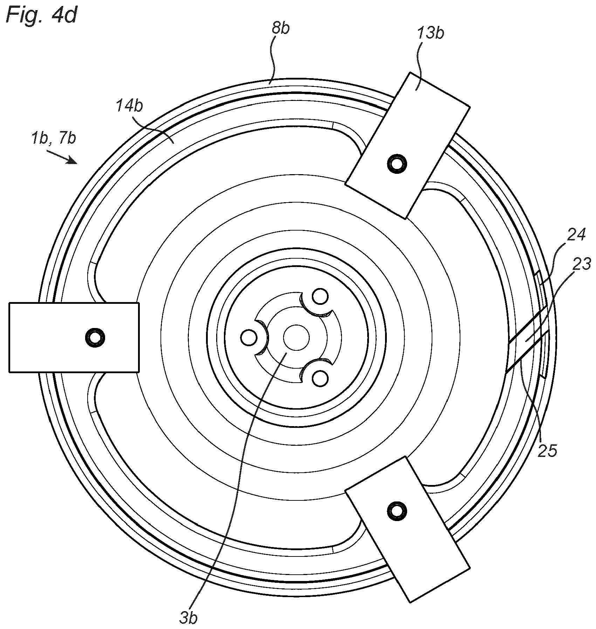

Fig. 4d shows the rotatable structure 1b with the knife unit 7b mounted thereon. In this state the rotatable structure 1b and the knife unit 7b are ready for use in a robotic work tool. The mounting and dismounting of the knife unit 7b may be performed quickly with few tools. Arranging a skid plate on the rotatable structure 1b and the knife unit 7b is optional.

In the embodiments which have been shown in the drawings as well as in further embodiments, which include some or all of the features according to the appended patent claims, the knife unit 7a, 7b is snapped into a mounted position on the rotatable support structure 1a, 1b. The circumferential edge 20a, 20b of the support structure 14a, 14b contacts and connects with the C-shaped edge 8a, 8b, and when the rotatable structure 1a, 1b is rotated by the drive shaft, the connection may be enhanced by a slight radial expansion of the support structure 14a, 14b. There may be a corresponding centripetal force from the C-shaped edge 8a, 8b, holding the circumferential edge 20a, 20b of the support structure 14a, 14b in its position. A friction force preventing slipping of the support structure 14a, 14b relative to the rotatable structure 1a, 1b is enhanced by the centripetal force. The risk of accidental dismounting of the knife unit 7a, 7b is hereby eliminated.

Dismounting of the knife unit 7a, 7b from the rotatable structure 1a, 1b may be performed by snapping the knife unit 7a, 7b out of its mounted position by a slight deformation of its support structure 14a, 14b. The deformation may be possible by a compression of the slits 16, 25. If needed, a tool, such as a screwdriver or a specialized tool, may be applied to accomplish the deformation.

In some further embodiments, which are not disclosed in the drawings, the support structure may have a portion which is domed or arched, preferably at its center. The support structure is deformable by applying a pressure on the central, domed portion, whereby it may change its shape in a snapping action. By the same action, the portion outside of the domed portion may change its shape and position, and thereby its outer edge may snap into or out of contact with a circumferential edge. A reverse action may take place in a controlled manner, and hereby both mounting and dismounting of the knife unit on a rotatable structure may be performed.

In some embodiments the fastening of the knives 13a, 13b may be articulated. This feature may be desirable for certain uses, depending on the vegetation that is to be cut and the desired result. The articulation may in some embodiments be used for adjusting the angle of the knives 13a, 13b relative to the outer edge of the support structure 14a, 14b.

The knife unit 7a, 7b and the rotatable structure 1a, 1b may be covered by a skid plate in the work tool. If that is the case, the skid plate may have to be removed to make the rotatable structure 1a, 1b and the knife unit 7a, 7b accessible. However, the disassembly of the work tool needed in order to exchange the knives 13a, 13b is still limited.

The uncomplicated mounting and dismounting of the knife unit 7a, 7b may allow all the knives to be exchanged simultaneously, with a minimal effort and downtime. If the knife unit 7a, 7b is not a disposable part, the knives 13a, 13b thereon may be dismounted and sharpened at leisure, while another knife unit 7a, 7b is mounted and used on the work tool. The risk of injuries is minimized, since the knives 13a, 13b need not be touched when they are mounted in an awkward position on the tool.

The invention has mainly been described above with reference to a few embodiments. However, as is readily appreciated by a person skilled in the art, other embodiments than the ones disclosed above are equally possible within the scope of the invention, as defined by the appended patent claims.

In the claims, the word "comprising" does not exclude other elements or steps, and the indefinite article "a" or "an" does not exclude a plurality.

## Claims

1. Knife unit (7a, 7b) for a cutter assembly in a work tool, comprising one or more knives (13a, 13b) and a support structure (14a, 14b) carrying the knives (13a, 13b), and extending around a center, the support structure (14a, 14b) comprising a connector (20a, 20b) for connection with a rotatable structure (1a, 1b), wherein the connector (20a, 20b) is arranged at least partly at a peripheral edge of the support structure (1a, 1b).

2. Knife unit (7a, 7b) according to claim 1, wherein the support structure (14a, 14b) extends mainly in a single plane.

3. Knife unit (7a, 7b) according to claim 1 or claim 2, wherein the support structure (14a, 14b) is arranged to be locally deformable in one or more areas thereof.

4. Knife unit (7a, 7b) according to claim 1 or claim 2, wherein the support structure (14a, 14b) is arranged to be continuously deformable.

5. Knife unit (7a, 7b) according to any of claims 1 to 4, wherein the support structure (14a, 14b) has an at least partly circular periphery.

6. Knife unit (7a, 7b) according to any of claims 1 to 5, wherein the support structure (14a, 14b) comprises at least one weakened portion (19).

7. Knife unit (7a, 7b) according to claim 6, wherein the support structure (14a, 14b) comprises at least one cut-out portion (16, 17, 25) in a main plane of extent of the support structure (14a, 14b).

8. Knife unit (7a) according to any of claims 6 to 7, wherein the weakened portion (19) comprises a narrow, bendable bridge of material between larger portions of the support structure (14a).

9. Knife unit (7a, 7b) according to any of claims 1 to 8, wherein the connector (20a, 20b) includes a slit (18).

10. Knife unit (7a) according to any of claims 1 to 9, wherein the support structure (14a) comprises a circular disc with radial slits (16).

11. Knife unit (7a, 7b) according to any of claims 1 to 10, wherein the connector (20a, 20b) comprises a circumferential bead.

12. Knife carrier arrangement including a detachable knife unit (7a, 7b) according to any of the preceding claims.

13. Knife carrier arrangement (1a, 1b) according to claim 12, wherein the knife carrier arrangement (1a, 1b) comprises at least one connector device (8a, 8b) for interaction with the connector (20a, 20b) of the knife unit (7a, 7b).

14. Knife carrier arrangement (1a, 1b) according to claim 13, wherein at least one connector device (8a, 8b) has a C-shaped cross-section.

15. Lawn mower comprising a knife carrier arrangement (1a, 1b) according to any of the claims 12 to 14.

16. Method for performing a knife exchange in a work tool comprising a knife carrier arrangement (1a, 1b) according to any of claims 12 and 15 wherein the method comprises the steps of:
- deforming the knife unit (7a, 7b) in one or more deformable portions (19) of the support structure,
- loosening the connection portion (20a, 20b) of the support structure (14a, 14b) from the knife carrier arrangement (1a, 1b),
- dismounting the knife unit (7a, 7b) from the knife carrier arrangement (1a, 1b),
- placing a second knife unit (7a, 7b) on the knife carrier arrangement (1a, 1b), and
- deforming the deformable portion (19) of the second knife unit (1a, 1b) to bring the connector (20a, 20b) into connection with the knife carrier arrangement (1a, 1b).
